# EUROPÄISCHE PATENTANMELDUNG

(11) **EP 1 890 111 A2**
(43) Veröffentlichungstag der Anmeldung: **20.02.2008**
(21) Anmeldenummer: 07014953.9
(22) Anmeldetag: 31.07.2007
(51) Int. Cl.: G01C 21/36

(54) **Fahrzeugnavigationssystem**

(30) Priorität: 17.08.2006 DE 102006038676
(71) Anmelder: Bayerische Motorenwerke Aktiengesellschaft, 80809 München (DE)
(72) Erfinder: Tava, Marcello, 80469 München (DE); Steins, Wilfried, 85737 Ismaning (DE); Biechele, Bernd, 81476 München (DE)

(57) **Zusammenfassung**

Gegenstand der Erfindung ist ein Fahrzeugnavigationssystem (NS) mit einer Anzeigeeinrichtung (AE) zur Anzeige einer animierten Routenvorschau (ARV), mit einem Drehelement (DE) zur Beeinflussung der Geschwindigkeit der animierten Routen-vorschau (ARV) und mit einer Steuereinrichtung (STE), die derart mit der Anzeigeeinrichtung (AE) und dem Drehelement (DE) zusammenwirkt, dass die Beeinflussung der Geschwindigkeit der animierten Routenvorschau (ARV) auf einem Drehwinkel (DW) des Drehelementes (DE) basiert.

## Beschreibung

Die Erfindung betrifft ein Fahrzeugnavigationssystem mit einer Anzeigeeinrichtung zur Anzeige einer animierten Routenvorschau.

Die rasante technologische Entwicklung auf dem Gebiet der Fahrzeugelektronik führte in den letzten Jahren zur Entwicklung und Bereitstellung von satellitengestützten Navigationssystemen mit einer Anzeigeeinrichtung zur Darstellung von Routeninformationen.

Ein solches Navigationssystem ist beispielsweise aus der WO 2004/076978 A1 bekannt. Das Navigationssystem umfasst dabei eine Routenanimation, deren Geschwindigkeit beeinflusst werden kann (play, fast forward). Eine wirtschaftliche und einfach bedienbare Integration dieser Beeinflussungsmöglichkeit in ein Fahrzeug ist in dieser Veröffentlichung nicht gelehrt.

Aus der DE 19752 056 A1 ist ein Drehelement, insbesondere ein Dreh-Druckknopf, bekannt, mit dem eine Bildschirmanzeige angesteuert wird.

Der Erfindung liegt die Aufgabe zu Grunde, ein Navigationssystem anzugeben, das auch während der Fahrt einfach zu bedienen ist.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung beruht demnach auch auf dem Gedanken, die Geschwindigkeit einer animierten Routenvorschau mittels eines Drehelementes abhängig von dem Drehwinkel des Drehelementes zu beeinflussen, insbesondere derart, dass die Geschwindigkeit der animierten Routenvorschau mit dem Drehwinkel zunimmt.

Dadurch ist die gezielte Beeinflussung der Geschwindigkeit (Abspielgeschwindigkeit) der Routenvorschau für den Fahrer auch während der Fahrt ohne wesentliche Einschränkung der Fahrsicherheit möglich. Denn die Geschwindigkeit der Routen-vorschau kann über das Drehelement intuitiv durch den Fahrer beeinflusst werden, ohne die visuelle Aufmerksamkeit auf das Beeinflussungselement, hier das Drehelement, selbst zu richten.

Dieser Effekt wird noch verstärkt, wenn vorzugsweise die Darstellung des aktuellen Drehwinkels des Drehelementes (beispielsweise mittels eines stilisierten Drehelementes) auf der Anzeigeeinrichtung erfolgt, auf der auch die Routenvorschau dargestellt wird. Der aktuelle Drehwinkel des Drehelementes ist vorzugsweise ein Maß für die Geschwindigkeit der Routenvorschau. So kann mit einem Blick auf die Anzeigeeinrichtung, die in der Regel in der Nähe der Windschutzscheibe liegt, sowohl die Routenvorschau verfolgt werden, als auch der aktuelle Drehwinkel des Drehelementes und somit ein Maß für die Geschwindigkeit der Routenvorschau erfasst werden.

Dieses schnelle Erfassen vieler Informationen auf einen Blick, der im Wesentlichen in eine einzige Richtung gerichtet ist, die zudem nahe der Blickrichtung auf die Fahrbahn liegt, und im Wesentlichen auf eine Entfernung fokussiert ist, die vorzugsweise möglichst nahe an der Entfernung eines voraus fahrenden Fahrzeuges liegt, ist im Rahmen eines Fahrzeugnavigationssystems besonders vorteilhaft und trägt zur Fahrsicherheit bei.

Besonders bevorzugt wird der aktuelle Drehwinkel des Drehelementes nur für eine vorgegebene Zeitdauer dargestellt, die beispielsweise mit der letzten Beeinflussung der Geschwindigkeit der Routenvorschau durch den Fahrer beginnt. Nach dieser vorgegebenen Zeitdauer wird die Darstellung der Routenvorschau auf der Anzeigeeinrichtung derart vergrößert, dass die Fläche, die zuvor für die Darstellung des aktuellen Drehwinkels des Drehelementes verwendet wurde, auch zur Darstellung der Routenvorschau verwendet wird. Vorzugsweise wird mit Beginn einer erneuten Beeinflussung der Geschwindigkeit der Routenvorschau über das Drehelement durch den Fahrer die Darstellung der Routenvorschau automatisch wieder verkleinert und der aktuelle Drehwinkel des Drehelementes dargestellt.

Alternativ dazu wird der aktuelle Drehwinkel des Drehelementes vorzugsweise der Routenvorschau überlagert dargestellt. Diese überlagerte Darstellung kann - wie soeben beschrieben - nur für eine vorgegebene Zeitdauer erfolgen.

Vorzugsweise ist mittels des Drehelementes zudem das Navigationssystem über eine hierarchisch aufgebaute Menüstruktur bedienbar.

Dies hat den Vorteil, dass zur Beeinflussung der Geschwindigkeit einer Routenanimation ein ohnehin schon für einen anderen Zweck vorhandenes Eingabeelement genützt wird. Dadurch können Kosten und Bauraum für ein eigens zur Beeinflussung der Geschwindigkeit einer Routenanimation vorgesehenes Eingabeelement eingespart werden.

Besonders intuitiv und einfach sind die Funktionen "Beeinflussung der Geschwindigkeit einer Routenanimation" und "Bedienung des Navigationssystem" dann durch ein Drehelement realisierbar, wenn das Drehelement als Dreh-Druckknopf ausgeführt ist, der vorzugsweise um eine Drehachse drehbar, in Richtung der Drehachse bewegbar (drückbar) und senkrecht zur Drehachse bewegbar oder schwenkbar ausgeführt ist.

Vorzugsweise werden mittels des Drehelementes auch Routeninformationen eingegeben, wobei die Routenvorschau abhängig von den engegebenen Routeninformationen, insbesondere von dem eingegebenen oder abgespeicherten Routenziel und dem Routenstart, erfolgt. Die Routeninformationen können auch eingegebene oder abgespeicherte Zwischenziele oder Wegepunkte umfassen, auf denen dann die Route und die Routenvorschau basieren. Der Routenstart kann als aktueller Standort durch eine Ortsermittlungseinrichtung automatisch ermittelt werden oder ebenfalls durch das Drehelement eingegeben werden.

Besonders bevorzugt sind die Routeninformationen, insbesondere unter einem ersten Menüpunkt der Menüstruktur, mittels des Drehelementes eingebbar.

Vorteilhafterweise ist die Geschwindigkeit, mit der die Routenvorschau erfolgt, insbesondere unter einem zweiten Menüpunkt der Menüstruktur, mittels des Drehelementes beeinflussbar.

Besonders bevorzugt ist vorgesehen, dass mit dem Beginn oder dem Auslösen der Routenvorschau das Drehelement automatisch in einen Routenvorschau-Betriebszustand versetzt wird, in dem durch das Drehen des Drehelementes die Geschwindigkeit der Routenvorschau geändert wird, und vorzugsweise zudem durch einen Druck auf das Drehelement die Routenvorschau angehalten wird und durch einen weiteren Druck auf das das Drehelement die Routenvorschau fortgesetzt wird. Mit dem Ende der Routenvorschau wird das Drehelement vorzugsweise automatisch in einen Menünavigations-Betriebszustand versetzt, in dem zur Bedienung verschiedener Fahrzeugfunktionen durch das Drehelement durch ein entsprechendes Menü navigiert wird.

Eine bevorzugte Weiterbildung der Erfindung sieht vor, dass die Routenrichtung der Routenvorschau (von Start zu Ziel oder von Ziel zu Start), insbesondere unter dem zweiten Menüpunkt der Menüstruktur, mittels des Drehelementes eingebbar ist.

Die Geschwindigkeit der Routenvorschau hängt vorzugsweise - zusätzlich zur manuellen Beeinflussung über das Drehelement - von der Art der Straße (beispielsweise Autobahn oder Ortsdurchfahrtsstraße) des entsprechenden Routenabschnittes (je höher die regelmäßige Fahrzeuggeschwindigkeit auf dieser Art von Straße, desto zeitlich kürzer die Darstellung oder desto höher die Geschwindigkeit der Routenvorschau) und/oder von der erwarteten Gesamt-Routendauer (je länger die Gesamt-Routendauer desto kürzer die Darstellung oder desto höher die Geschwindigkeit der Routenvorschau) ab.

Vorzugsweise ist die Geschwindigkeit der Routenvorschau mittels des Drehelementes, insbesondere jeweils in jede Routenrichtung, entsprechend zumindest zweier verschiedener Skalierungsfaktoren skalierbar. Dabei sind den verschiedenen Skalierungsfaktoren vorzugsweise verschiedene vorgegebene Drehwinkel des Drehelements zugeordnet.

Ein Skalierungsfaktor ist vorzugsweise definiert als der Quotient aus einer vorgegebenen (Gesamt-)Routenvorschaudauer, von beispielsweise einer Minute bzw. 3 Minuten, und der durch das Navigationssystem ermittelten angenommenen, erwarteten oder berechneten Routendauer, von beispielsweise 50 Minuten. Es können dann basierend auf den Skalierungsfaktoren von 1/50 bzw. 3/50 die entsprechenden Geschwindigkeiten der Routenvorschau bestimmt werden. Bei Auswahl des Skalierungsfaktors 1/50 bzw. 3/50 durch den Nutzer über das Drehelement wird die Geschwindigkeiten der Routenvorschau derart eingestellt, dass die Dauer der Routen-vorschau insgesamt 1 Minute bzw. 3 Minuten beträgt.

Besonders bevorzugt sind die verschiedenen vorgegebenen Drehwinkel, insbesondere samt zugeordnetem Skalierungsfaktor oder entsprechender Informationen, temporär, insbesondere dem dargestellten Drehelement zugeordnet, auf der Anzeigeeinrichtung darstellbar, wohingegen diese Informationen vorzugsweise nicht auf dem Drehelement selbst oder um das Drehelement herum dargestellt sind.

Vorteilhafterweise sind mindestens fünf Drehwinkel vorgegeben, denen für jede Routenrichtung jeweils zwei Skalierungsfaktoren zugeordnet sind, und denen eine Routenvorschau-Pause-Funktion zugeordnet ist.

Alternativ zur Vorgabe weniger diskreter Skalierungsfaktoren, können vielen, mindestens zehn, verschiedenen Skalierungsfaktoren quasikontinuierlich entsprechende vorgegebene Drehwinkel zugeordnet sein, um dem Nutzer eine genauere Beeinflussung der Geschwindigkeit der Routenvorschau zu ermöglichen.

Die animierte Routenvorschau beruht vorzugsweise auf einer zeitlich aufeinander folgenden Anzeige von Einzeibildern, insbesondere Straßenkartenausschnitten in zweidimensionaler oder dreidimensionäler Darstellung, insbesondere aus der Vogelsperspektive.

Den Straßenkartenausschnitten können entsprechende Routenpfeile oder Straßen- bzw. Ortsnamen überlagert werden, oder die Straßenkartenausschnitte können entsprechende Routenpfeile oder Straßen- bzw. Ortsnamen umfassen. Die Straßenkartenausschnitte können gezeichnet sein, fotografiert sein, im Computer berechnet werden und/oder in einer Speichereinrichtung abgespeichert sein. Die den eingegebenen Routeninformationen entsprechenden Straßenkartenausschnitte sind vorzugsweise Straßenkartenausschnitte, die zur bildlichen Erläuterung des auf den Routeninformationen basierenden Routenverlaufs geeignet sind. Dabei kann die virtuelle Fahrzeugposition dem Straßenkartenausschnitt im Zentrum überlagert dargestellt sein.

Besonders bevorzugt ist ein Fahrzeugnavigationssystem mit einer Speichereinrichtung zur Speicherung einer elektronischen Straßenkarte, mit einer Anzeigeeinrichtung, wie ein Grafikdisplay, zur zeitlich aufeinander folgenden Anzeige von Straßenkartenausschnitten, mit einem Dreheelement zur Eingabe von Routeninformationen und mit einer Steuereinrichtung, die derart mit der Speichereinrichtung, der Anzeigeeinrichtung und dem Drehelement zusammenwirkt, dass zur animierten Routen-vorschau automatisch zeitlich aufeinander folgend die Straßenkartenausschnitte auf der Anzeigeeinrichtung dargestellt werden, die den eingegebenen Routeninformationen entsprechen oder die darauf basieren, und dass die Zeitdauer, mit der die einzelnen Straßenkartenausschnitte dargestellt werden, mittels des Drehelementes einstellbar ist.

Im Folgenden wird die Erfindung anhand von Beispielen unter Bezugnahme auf die folgenden Figuren näher erläutert:
Figur 1 zeigt ein vereinfachtes Prinzipschaltbild eines Fahrzeugnanigationssystems;
Figuren 2 bis 4 zeigen ein Drehelement und eine Anzeigeeinrichtung in verschiedenen Bediensituationen.

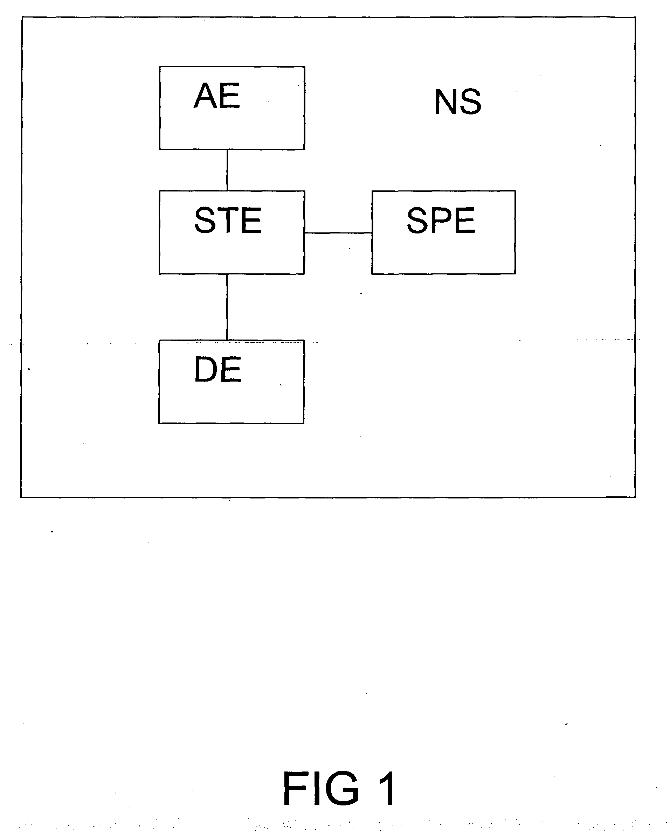

Figur 1 zeigt ein Fahrzeugnavigationssystem NS, das mit einer Anzeigeeinrichtung AE, wie einem Grafikdisplay, einer Speichereinrichtung SPE, einem Drehelement DE und einer damit verbundenen Steuereinrichtung STE ausgestattet ist.

Auf der Anzeigeeinrichtung AE, die auch die Speichereinrichtung SPE und/oder die Steuereinrichtung STE zumindest teilweise umfassen kann, wird nach einer Auswahl des entsprechenden Menüpunktes durch den Nutzer eine animierte Routen-vorschau dargestellt.

In der Speichereinrichtung SPE können Routeninformationen und eine elektronische Straßenkarte abgespeichert sein

Das Drehelement DE ist als Dreh-Druckknopf ausgeführt, der auch zur Bedienung des Navigationssystems und zur Eingabe von Routeninformationen eingerichtet sein kann.

Die Routenvorschau basiert in an sich bekannter Weise auf Routeninformationen und Straßenkartenausschnitten.

Die Steuereinrichtung STE ist als programmgesteuerte Prozessoreinrichtung oder als anwendungsspezifische integrierte Schaltung ausgeführt, und derart eingerichtet, dass die Beeinflussung der Geschwindigkeit der animierten Routenvorschau auf einem Drehwinkel des Drehelementes basiert.

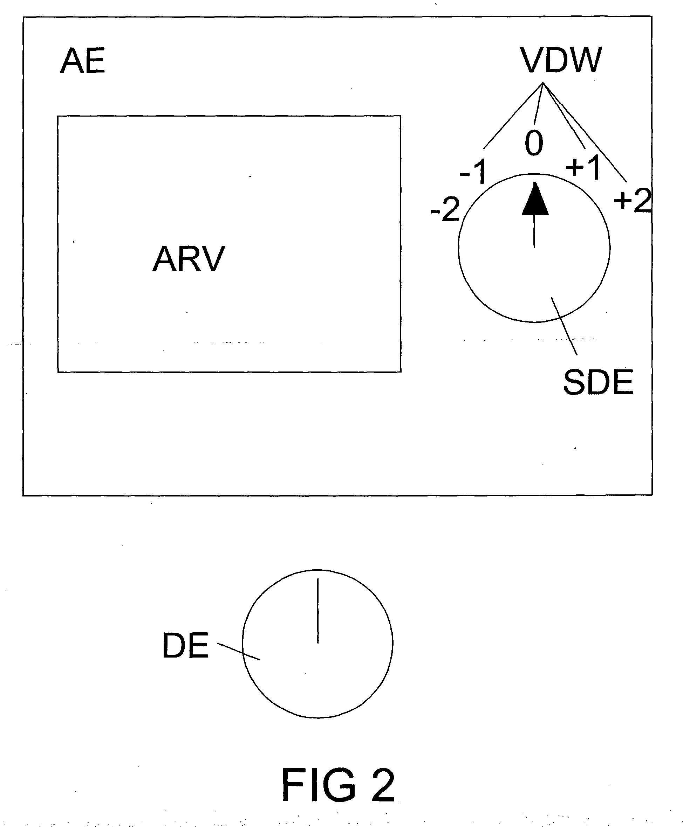

Figur 2 zeigt eine Anzeigeeinrichtung AE zur Darstellung einer animierten Routen-vorschau ARV. Die Anzeigeeinrichtung AE ist vorzugsweise in dem Armaturenbrett des Fahrzeuges integriert.

Vorzugsweise auf der Mittelkonsole des Fahrzeuges ist ein Drehelement DE angeordnet.

Auf der Anzeigeeinrichtung AE ist nach Auswahl des Menüpunktes "Routenvorschau" durch das Drehelement ein stilisiertes Drehelement SDE samt vorgegebener Drehwinkel VDW dargestellt, die jeweils verschiedene Geschwindigkeiten bzw. Skalierungsfaktoren und/oder Routenrichtungen der Routenvorschau repräsentieren.

Beispielsweise gibt die Position der Zahl "+1" relativ zu dem stilisierten Drehelement SDE einen vorgegebenen Drehwinkel VDW an, der Betrag "1" gibt die Geschwindigkeit der Routenvorschau an und das Vorzeichen "+" gibt die Routenrichtung der Routenvorschau an. Anstelle von Zählen können die verschiedenen Geschwindigkeiten und/oder Routenrichtungen der Routenvorschau beispielsweise auch durch Einfach- oder Doppelpfeile in entgegen gesetzte Richtungen angegeben werden.

Das Drehelement DE ist um den Drehwinkel 0 Grad, also nicht, aus der Ruhelage gedreht. Die Geschwindigkeit der Routenvorschau ist Null, das heißt es wird ein stehendes Bild, beispielsweise ein Straßenkartenausschnitt, auf der Anzeigeeinrichtung AE dargestellt. Alternativ oder ergänzend dazu kann vorgesehen sein, die Geschwindigkeit der Routenvorschau dadurch auf Null zu stellen, dass auf das drückbar ausgeführte Drehelement gedrückt wird. Ein weiterer Druck auf das Drehelement kann die Fortsetzung der Routenvorschau auslösen, wobei die Fortsetzung in der Darstellung (Maßstab und/oder Kartenausschnitt) erfolgt oder auf der Darstellung basiert, mit der die Routenvorschau durch das erste Drücken beendet wurde.

Wenn die Geschwindigkeit der Routenvorschau Null ist, kann durch ein Schwenken bzw. Bewegen des senkrecht zu seiner Drehachse schwenkbar bzw. bewegbar ausgeführten Drehelementes der dargestellte Kartenausschnitt entsprechend bewegt oder geändert werden und/oder ein der Kartendarstellung überlagerter Marker entsprechend bewegt werden. Dadurch kann die Routenumgebung betrachtet werden. Zudem kann dann, wenn die die Geschwindigkeit der Routenvorschau Null ist, ein Drehen des Drehelementes ein entsprechendes Drehen der Kartendarstellung zur Folge haben.

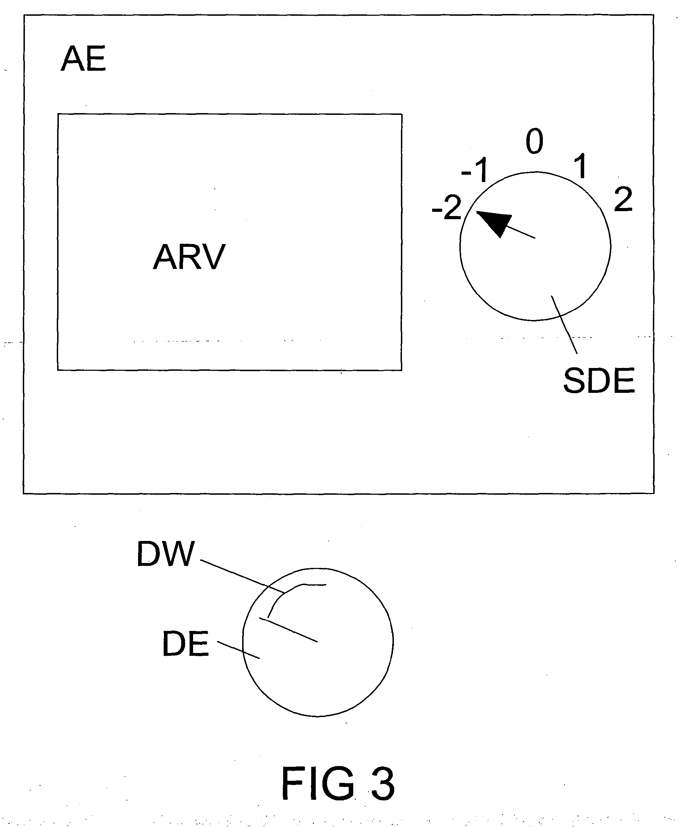

Figur 3 entspricht hinsichtlich dargestellter Komponenten und Bezugszeichen im Wesentlichen der Figur 2.

Wie dargestellt, ist das Drehelement DE nun durch den Fahrer allerdings um einen Drehwinkel DW, beispielsweise -10 Grad, aus seiner Ruhelage gedreht. Dieser Drehwinkel ist auf der Anzeigeeinrichtung AE mittels des stilisierten Drehelementes SDE dargestellt. In diesem Fall entspricht der Drehwinkel dem vorgegebenen Drehwinkel, der durch die Lage der Zahl "-2" relativ zum dargestellten Drehelement SDE repräsentiert wird. Aufgrund der Einstellung dieses Drehwinkels durch den Fahrer wird automatisch die Routenvorschau in Richtung von Zielpunkt zu Startpunkt, also rückwärts, mit der Abspielgeschwindigkeit, die dem Drehwinkel "-2" zugeordnet ist, und die mittels eines entsprechenden Skalierungsfaktors berechnet wird, abgespielt. Trotz der Richtung von Zielpunkt zu Startpunkt werden gegebenenfalls Routenpfeile weiter in Richtung von Startpunkt zu Zielpunkt angezeigt.

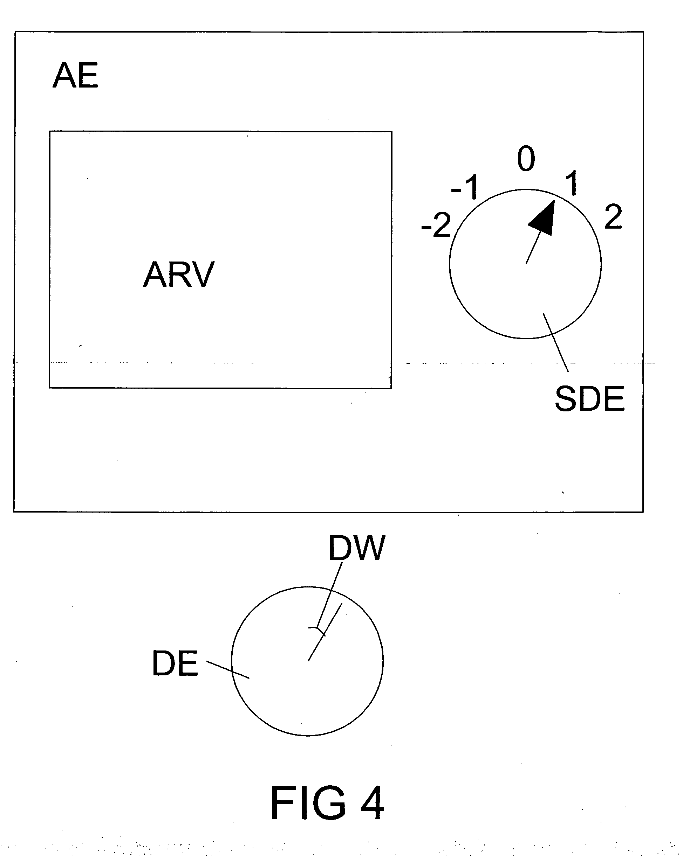

Figur 4 entspricht hinsichtlich dargestellter Komponenten und Bezugszeichen ebenfalls im Wesentlichen der Figur 2.

Wie dargestellt, ist das Drehelement DE nun durch den Fahrer allerdings um einen Drehwinkel DW, beispielsweise 5 Grad, aus seiner Ruhelage gedreht. Dieser Drehwinkel ist ebenfalls auf der Anzeigeeinrichtung AE mittels des stilisierten Drehelementes SDE dargestellt. In diesem Fall entspricht der Drehwinkel dem vorgegebenen Drehwinkel, der durch die Lage der Zahl "+1" repräsentiert wird. Aufgrund der Einstellung dieses Drehwinkels durch den Fahrer wird automatisch die Routenvorschau in Richtung von Startpunkt zu Zielpunkt mit der Abspielgeschwindigkeit, die dem Drehwinkel "+1" zugeordnet ist, und die mittels eines entsprechenden Skalierungsfaktors berechnet wird, abgespielt.

## Patentansprüche

1. Fahrzeugnavigationssystem (NS)
- mit einer Anzeigeeinrichtung (AE) zur Anzeige einer animierten Routenvorschau (ARV),
- mit einem Drehelement (DE) zur Beeinflussung der Geschwindigkeit der animierten Routenvorschau (ARV) und
- mit einer Steuereinrichtung (STE), die derart mit der Anzeigeeinrichtung (AE) und dem Drehelement (DE) zusammenwirkt,
- dass die Beeinflussung der Geschwindigkeit der animierten Routenvorschau (ARV) auf einem Drehwinkel (DW) des Drehelementes (DE) basiert.

2. Fahrzeugnavigationssystem (NS) nach Anspruch 1,
bei dem das Navigationssystem (NS) mittels des Drehelementes (DE) über eine hierarchisch aufgebaute Menüstruktur bedienbar ist.

3. Fahrzeugnavigationssystem (NS) nach einem der vorhergehenden Ansprüche,
bei dem mittels des Drehelementes (DE) Routeninformationen eingebbar sind, auf denen die animierte Routenvorschau (ARV) basiert.

4. Fahrzeugnavigationssystem (NS) nach einem der vorhergehenden Ansprüche,
bei dem die Routenrichtung der animierten Routenvorschau (ARV) mittels des Drehelementes (DE) beeinflussbar ist.

5. Fahrzeugnavigationssystem (NS) nach einem der vorhergehenden Ansprüche,
bei dem die Geschwindigkeit der animierten Routenvorschau (ARV) von der Art der Straße des entsprechenden Routenabschnittes abhängt.

6. Fahrzeugnavigationssystem (NS) nach einem der vorhergehenden Ansprüche,
bei dem die Geschwindigkeit der animierten Routenvorschau (ARV) entsprechend zumindest zweier verschiedener Skalierungsfaktoren skalierbar ist.

7. Fahrzeugnavigationssystem (NS) nach einem der vorhergehenden Ansprüche,
bei dem den verschiedenen Skalierungsfaktoren verschiedene vorgegebene Drehwinkel (VDW) des Drehelementes (DE) zugeordnet sind.

8. Fahrzeugnavigationssystem (NS) nach einem der vorhergehenden Ansprüche,
bei dem der aktuelle Drehwinkel (DW) des Drehelementes (DE) auf der Anzeigeeinrichtung (AE) darstellbar ist.

9. Fahrzeugnavigationssystem (NS) nach einem der vorhergehenden Ansprüche,
bei dem die verschiedenen vorgegebenen Drehwinkel (VDW) auf der Anzeigeeinrichtung (AE) darstellbar sind.

10. Fahrzeugnavigationssystem (NS) nach einem der vorhergehenden Ansprüche,
bei dem mindestens fünf Drehwinkel (VDW) vorgegeben sind, denen für jede Routenrichtung jeweils zwei Skalierungsfaktoren zugeordnet sind, und denen eine Routenvorschau-Pause-Funktion zugeordnet ist.
